# FASCICULE DE BREVET EUROPEEN

(11) **EP 3 781 835 B1**
(45) Date de publication et mention de la délivrance du brevet: **21.02.2024**
(21) Numéro de dépôt: 19720967.9
(22) Date de dépôt: 03.04.2019
(51) Int. Cl.: F16F 9/504, F16F 7/10, F16F 9/346, F16F 9/22, F16F 9/18, F16F 9/20, F16F 9/512

(54) **AMORTISSEUR HYDRAULIQUE AVEC AMORTISSEMENT INERTIEL À FLUIDE POUR LA SUSPENSION D'UN VÉHICULE AUTOMOBILE**
FLUIDDÄMPFER MIT FLÜSSIGKEITSBASIERTER TRÄGHEITSDÄMPFUNG FÜR EINE FAHRZEUGFEDERUNG
FLUID DAMPER WITH INERTIAL FLUID DAMPING FOR A VEHICLE SUSPENSION

(30) Priorité: 17.04.2018 FR 1853332; 28.03.2019 FR 1903247
(43) Date de publication de la demande: 24.02.2021
(73) Titulaire: Stellantis Auto SAS, 78300 Poissy (FR)
(72) Inventeur: CHILLON, Jean, 92100 Boulogne Billancourt (FR); MONTEIL, Christophe, 91640 Briis Sous Forges (FR); BONTRON, Francis, 92190 Meudon (FR)
(86) Numéro de dépôt international: PCT/FR2019/050779
(87) Numéro de publication internationale: WO 2019/202231

(56) Documents cités:
- WO-A1-2011/089373
- CN-Y- 201 427 510
- JP-A- H02 163 531
- JP-A- 2000 018 308
- US-A- 2 720 944
- US-A- 3 237 931
- US-A1- 2013 037 362

## Description

L'invention a trait au domaine de l'amortissement de chocs, plus particulièrement au niveau des suspensions de véhicules automobiles.

Le document de brevet publié US 2013/0037362 A1 divulgue différentes configurations d'amortisseur de chocs notamment pour suspension de véhicule automobile. Plus particulièrement, l'amortisseur illustré aux figures 14 et 15 de ce document comprend, essentiellement, un premier élément formant une enveloppe cylindrique et un deuxième élément comprenant une tige supportant un premier et un deuxième piston, lesdits pistons coulissant axialement dans l'enveloppe cylindrique. Cette dernière est séparée axialement en deux chambres hydrauliques, la première desdites chambres formant avec le premier piston un premier circuit hydraulique dit inertiel. Ce dernier comprend, en outre, une conduite formant un enroulement autour du premier élément généralement cylindrique, de sorte à ce que le déplacement du premier piston par rapport à la première chambre déplace un fluide hydraulique dans la chambre au travers du conduit, ce déplacement formant un amortissement inertiel. La deuxième des chambres forme, avec le deuxième piston, un deuxième circuit hydraulique dit d'amortissement en ce que le piston comprend un passage de fuite de section réduite pour un fluide hydraulique. Cet amortisseur est intéressant en ce qu'il combine deux types d'amortissement, à savoir un amortissement classique dont la force est fonction de la vitesse du mouvement de coulissement relatif entre la tige et le cylindre et un amortissement inertiel dont la force est fonction de l'accélération dudit mouvement. Il présente cependant un encombrement axial important. De plus, la réalisation, la mise en forme et la mise en place du conduit spiralé présente des difficultés notamment au niveau de la réalisation de l'étanchéité avec le corps de l'enveloppe cylindrique. La résistance à la corrosion du conduit spiralé peut également présenter des difficultés. Aussi, avec cet amortisseur, la fonction d'amortissement inertiel est en permanence active, ce qui, dans certaines conditions de fonctionnement, peut s'avérer négatif. De plus, avec cet amortisseur, la fonction d'amortissement inertiel ne peut être facilement calibrée différemment sans modifier profondément la forme des conduits, ce qui pose un problème dans le cas de plusieurs applications sur différents véhicules de masses différentes.

On connait encore le document US3237931A correspondant au préambule de la revendication 1.

L'invention a pour objectif de pallier au moins un des inconvénients de l'état de la technique susmentionné. Plus particulièrement, l'invention a pour objectif de proposer un amortisseur de chocs pour suspension de véhicule automobile, qui pallie au moins un des inconvénients de l'état de la technique susmentionné. Plus particulièrement, l'invention a pour objectif de proposer un amortisseur qui soit compact, économique, facilement paramétrable et performant.

L'invention a pour objet un amortisseur pour suspension de véhicule automobile, comprenant un premier élément destiné à être fixé à l'une d'une partie mobile de la suspension et d'une partie fixe du véhicule et un deuxième élément, positionné concentriquement autour du premier élément, apte à coulisser axialement par rapport au premier élément et destiné à être fixé à l'autre de la partie mobile de la suspension et de la partie fixe du véhicule. Le premier élément et le deuxième élément forment un circuit hydraulique amortisseur et un circuit hydraulique inertiel. Le premier élément est un cylindre formant une chambre cylindrique et le deuxième élément comprend un piston intérieur monté coulissant dans la chambre cylindrique et une tige liée audit piston intérieur. La chambre cylindrique et le piston intérieur correspondent à un des circuits hydrauliques amortisseur et inertiel. Un cylindre extérieur est lié à la tige et entoure concentriquement le premier élément de manière à coulisser le long de la paroi extérieure du premier élément et à former avec le premier élément une chambre extérieure. Selon l'invention, le premier élément comprend une portion annulaire extérieure formant au moins un piston annulaire. L'amortisseur comprend une paroi cylindrique entourant concentriquement une partie du premier élément pour former une chambre annulaire. Le au moins un piston annulaire coulissant le long de ladite paroi cylindrique dans la chambre annulaire. La paroi cylindrique comprend une rainure hélicoïdale formant, en vis-à-vis du au moins un piston annulaire, au moins un passage pour le fluide hydraulique lors d'un coulissement du au moins un piston annulaire le long de la paroi cylindrique.

Selon une variante, la rainure hélicoïdale présente un pas variable de manière à faire varier la longueur du ou des passages pour le fluide hydraulique en fonction de la position de coulissement du au moins un piston annulaire par rapport à la paroi.

De manière avantageuse, l'au moins un piston annulaire s'étend axialement sur au moins deux tours de la rainure hélicoïdale.

Selon une caractéristique de l'invention, l'au moins un piston annulaire comprend au moins un passage axial de fuite pour le fluide hydraulique et au moins un clapet de fermeture configuré pour fermer ledit passage lorsque la course de coulissement dudit au moins un piston par rapport à la paroi est supérieur à une valeur prédéterminée.

Selon un premier mode de réalisation de l'invention, la chambre extérieure forme aussi ladite chambre annulaire dans laquelle est apte à coulisser le au moins un piston annulaire. Le au moins un piston comprend au moins deux pistons, les clapets de fermeture desdits pistons présentant des courses de fermeture différentes. L'au moins un piston comprend au moins un clapet de décharge apte à ouvrir un passage axial de décharge pour le fluide hydraulique en cas de surpression dudit fluide.

Préférentiellement, selon un second mode de réalisation de l'invention, entre le premier élément et le deuxième élément, est positionnée une paroi intermédiaire cylindrique apte à coulisser le long la paroi extérieure du premier élément, ladite paroi intermédiaire délimitant la chambre intermédiaire qui forme ladite chambre annulaire, qui est délimitée d'un côté par ladite paroi cylindrique et de l'autre côté par la paroi extérieure du premier élément. La chambre annulaire comportant un fluide hydraulique, le piston annulaire étant apte à coulisser le long de la chambre annulaire, ladite chambre annulaire comportant des moyens de rappel positionnés entre le piston annulaire et la paroi intermédiaire.

Selon une réalisation, les moyens de rappel qui comportent au moins deux ressort, un premier ressort qui est positionné en appui entre une première face axiale du piston et un premier bord en regard de la chambre annulaire et un second ressort étant positionné en appui entre une seconde face axiale du piston intermédiaire et un second bord en regard de la chambre annulaire.

Selon une réalisation, la chambre extérieure comporte un fluide hydraulique et une bague qui délimite en deux portions ladite chambre extérieure, ladite bague étant adaptée pour contrôler le transfert de fluide hydraulique entre les deux portions.

Selon une réalisation, la bague comporte au moins un clapet de décharge permettant un échange du fluide hydraulique entre les deux portions de la chambre extérieure au-delà d'une certaine pression de fluide dans une desdites deux portions et un clapet de fuite permettant une fuite permanente calibrée du fluide hydraulique entre les deux portions de la chambre extérieure.

L'invention a également pour objet un véhicule automobile comprenant au moins un amortisseur de suspension, remarquable en ce que l'au moins un amortisseur est conforme à l'invention.

Les mesures de l'invention sont intéressantes en ce qu'elles permettent de réaliser un amortisseur particulièrement performant tout en restant de construction simple et compacte. En effet, le fait de prévoir les circuits hydrauliques amortisseur et inertiel de manière concentrique permet de limiter la longueur de l'amortisseur. Le fait de prévoir, pour le deuxième élément coulissant, outre la tige et le piston coopérant avec le cylindre du premier élément coulissant, un cylindre extérieur entourant le premier élément coulissant permet de réaliser de manière particulièrement compacte et assez simple une deuxième chambre, en l'occurrence extérieure, et ainsi un deuxième circuit hydraulique. Aussi, l'agencement concentrique permet d'obtenir une surface de poussée du piston circonférentiel importante, ce qui permet de réduire la masse inertielle du fluide hydraulique. Par ailleurs, le fait de former le volume de fluide hydraulique inertiel par une rainure dans la paroi le long de laquelle coulisse un piston, est avantageux en ce que le passage inertiel pour le fluide est directement dans la chambre hydraulique et est ainsi protégé des agressions extérieures, comme notamment la corrosion. Aussi, cette construction évite les difficultés de réalisation d'étanchéité avec un conduit comme dans l'état de la technique. Aussi, grâce à cette construction, le pas de la rainure hélicoïdale peut être varié afin de faire varier la masse de fluide hydraulique inertiel en fonction du niveau de coulissement du premier élément par rapport au deuxième. Les clapets de fermeture et de décharge permettent d'activer et désactiver, respectivement, la fonction inertielle de manière contrôlée, ce qui est particulièrement favorable à une augmentation du confort de roulage du véhicule sur route normale tout en assurant un amortissement suffisant lors de débattements plus importants, comme par exemple sur des routes en mauvais état. Aussi, la réalisation d'une chambre auxiliaire pour la désactivation de la fonction inertielle procure davantage de flexibilité d'ajustement.

D'autres caractéristiques et avantages de la présente invention seront mieux compris à l'aide de la description et des dessins parmi lesquels :
- La figure 1 est une vue en coupe schématique d'un amortisseur selon un premier mode de réalisation de l'invention ;
- La figure 2 est une vue suivant la coupe II-II à la figure 1 ;
- La figure 3 est une vue en coupe schématique d'une variante de l'amortisseur de la figure 1 ;
- La figure 4 est une vue en coupe schématique d'un amortisseur selon un deuxième mode de réalisation de l'invention ;
- La figure 5 est une vue suivant la coupe V-V à la figure 4.

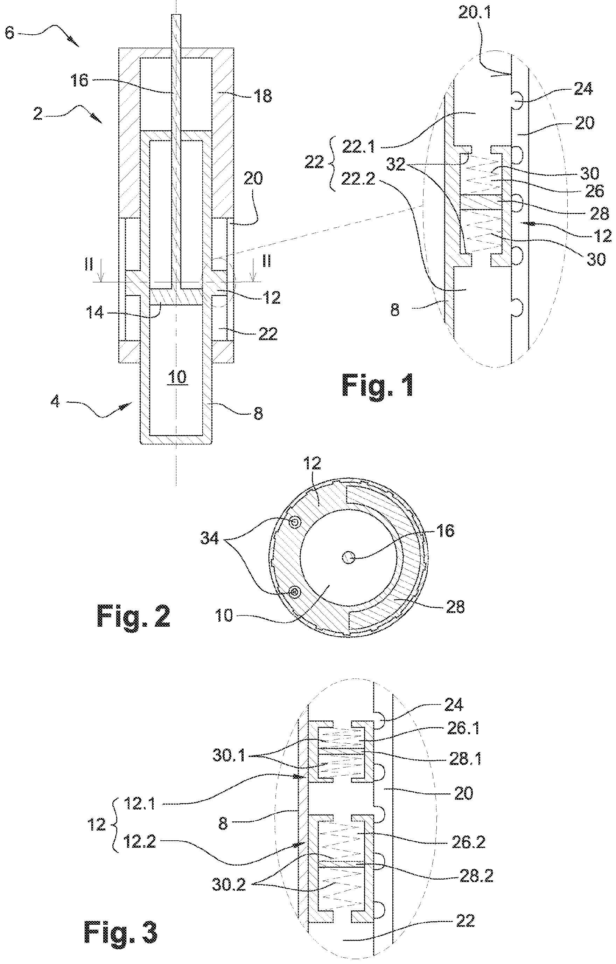

Les figures 1 à 3 illustrent un premier mode de réalisation de l'invention.

La figure 1 est une vue schématique, en coupe longitudinale, d'un amortisseur de chocs conforme à un premier mode de réalisation de l'invention. La coupe longitudinale passe par l'axe de l'amortisseur 2. Ce dernier comprend, essentiellement, un premier élément 4 et un deuxième élément 6, aptes à coulisser l'un par rapport à l'autre. Chacun des premier et deuxième éléments coulissants 4 et 6 est destiné à être fixé, au choix, à une pièce mobile de la suspension d'un véhicule ou à une pièce fixe de la carrosserie dudit véhicule, respectivement. Plus particulièrement, le premier élément 4 comprend un cylindre 8 délimitant une première chambre généralement cylindrique 10. Il comprend également une portion annulaire extérieure 12 formant un piston annulaire. Le deuxième élément 6 comprend, quant à lui, un piston 14 supporté par une tige 16 et monté coulissant dans la chambre cylindrique 10. A cet effet, le cylindre 8 est fermé à chacune de ses deux extrémités, la fermeture traversée par la tige (en haut suivant l'orientation de la figure 1) comportant des moyens d'étanchéité (non représentés) avec la tige 16, ces moyens étant en soi bien connus de l'homme de métier. La chambre 10 comprend un fluide hydraulique, avantageusement visqueux avec une viscosité supérieure ou égale à celle du liquide de suspension Citroën^{®} (LDS), à savoir supérieure ou égale à 18 mm²/s à 40°C et/ou 5.9 mm²/s à 100°C. Le piston 14 comprend un ou plusieurs passages à restriction potentiellement variable en fonction de différence de pression (non représentés), reliant les deux portions de chambre 10, de manière à ce qu'un coulissement relatif entre, d'une part, le piston 14 et la tige 16, et d'autre part le cylindre 8 provoque une circulation forcée du fluide hydraulique au travers du ou des passages à restriction sur le piston 14. La résistance à l'écoulement au travers de ce ou ces passages génère au niveau de la tige 16 et au niveau du cylindre 8 des efforts qui sont essentiellement proportionnels à la vitesse d'écoulement du fluide et donc de la vitesse de coulissement relatif entre le piston 14 et le cylindre. Ce principe d'amortissement est bien connu en soi de l'homme de métier.

Le deuxième élément coulissant 6 de l'amortisseur 2 comprend, outre le piston 14 et la tige 16, un cylindre extérieur 18 entourant le cylindre 8 du premier élément coulissant 4, et, partant, la tige 16 et le piston 14. Le cylindre extérieur 18 est rigidement lié à la tige 16. Plus spécifiquement, le cylindre extérieur 18 est monté coulissant sur la surface cylindrique extérieure du cylindre 8. Il comprend une paroi 20 entourant le cylindre 8 et à distance radialement dudit cylindre afin de former, avec ladite surface cylindrique extérieure, une deuxième chambre 22 annulaire. Celle-ci comprend un piston annulaire 12 lié au cylindre 8. Ce piston sépare par ailleurs la deuxième chambre 22 en deux portions de chambre 22.1 et 22.2. La paroi 20 délimitant la chambre 22 présente sur sa surface intérieure 20.1 une rainure 24 formée de manière hélicoïdale, notamment par usinage dans l'épaisseur de la paroi 20 depuis la surface intérieure 20.1. Le piston annulaire 12 s'étend axialement sur au moins un tour de la rainure hélicoïdale, préférentiellement sur au moins deux tours de ladite rainure, plus préférentiellement encore sur au moins trois tours ou plus. Le piston annulaire 12 comprend au moins un passage axial de fuite 26 et au moins un clapet de fermeture 28 maintenu en position axialement neutre par les ressorts 30. Dans cette position neutre, le clapet de fermeture 28 bien qu'obturant au moins en majeure partie le passage 26, peut se déplacer axialement entre les butées et sièges 32. La deuxième chambre 22 est remplie d'un fluide hydraulique, préférentiellement différent de celui de la première chambre. Ce fluide est avantageusement un fluide lourd de faible viscosité, en l'occurrence de viscosité inférieure ou égale à celle du glycol. Lors d'un mouvement de coulissement relatif entre les premier et deuxième éléments coulissants 4 et 6 de l'amortisseur, outre les phénomènes de passage du fluide de la première chambre 10 au travers du piston 14, mentionnés ci-avant, les volumes de portions 22.1 et 22.2 de la chambre 22 vont varier dans des sens opposés et, partant, provoquer un passage du fluide au travers et le long de la portion de la rainure 24 qui est située en vis-à-vis du piston annulaire 12. Le volume de cette portion de la rainure 24 étant rempli du fluide hydraulique, la masse correspondante dudit fluide forme ainsi une masse qui est mise en mouvement par le coulissement relatif entre les premier et deuxième éléments 14 et 16, générant ainsi une force d'amortissement qui est proportionnelle à l'accélération du mouvement de coulissement relatif entre les premier et deuxième éléments coulissants 14 et 16.

Lors de mouvements de coulissement de faibles amplitudes, l'inertie de la masse du fluide dans la portion de la rainure 24 en vis-à-vis du piston annulaire 12 génère une légère pression dans la portion de chambre 22 qui subit une diminution de son volume. Cette pression va alors déplacer axialement le clapet de fermeture 28 contre l'effort du ressort 30 situé du côté de l'autre portion de la chambre 22, c'est-à-dire celle qui subit une augmentation de volume. Cela signifie que l'effet d'amortissement par effet d'inertie ne commence véritablement que lorsque le clapet de fermeture 28 arrive en butée sur son siège 32 et ainsi ferme le passage 26. Le fluide sera alors mis en mouvement par écoulement dans la rainure 24 en vis-à-vis du piston annulaire 12.

En d'autres termes, le passage 26 dans le piston annulaire 12, combiné au clapet de fermeture 28 maintenu en position centrale par les ressorts 30 et apte à se déplacer axialement sur une course donnée, permet au circuit hydraulique inertiel formé dans la deuxième chambre 22 de n'être actif que pour des débattements de suspension supérieurs à une limite donnée. La course peut être supérieure à 2mm et/ou inférieure à 40mm.

La figure 2 est une vue en coupe II-II de l'amortisseur de la figure 1, au niveau du piston annulaire 12. On peut observer que le clapet de fermeture 28 décrit ci-avant s'étend de manière circonférentielle, en l'occurrence sur un demi-tour. Il est cependant entendu que d'autres configurations, comme notamment ¾ de tour, voire plus, sont également envisageables. On peut observer que le piston annulaire 12 peut également comprendre un ou plusieurs clapets de décharge 34, disposés d'un point de vue fluidique en parallèle au clapet de fermeture 28. Ces clapets de décharge 34 sont configurés pour s'ouvrir et donc laisser passer le fluide en présence d'une différence de pression atteignant ou dépassant une limite prédéterminée. Cela permet au circuit hydraulique inertiel de limiter son effet en présence de mouvements de coulissement avec une grande accélération.

Il est à noter qu'il est préférable que la désactivation du circuit inertiel puisse se faire dans les deux sens, c'est-à-dire lorsque l'amortisseur est en compression ou attaque, et lorsqu'il est en extension ou détente. A cet effet, au moins un clapet de décharge peut alors être prévu dans chacune des directions d'écoulement entre les deux portions 22.1 et 22.2 de la chambre 22.

Il est à noter que le ou les clapets de décharge 34 peuvent être disposés sur le clapet de fermeture 28. Ce dernier peut être formé de plusieurs éléments répartis sur la circonférence du piston 12.

Il est aussi à noter que le pas d'enroulement de la rainure hélicoïdale peut être variable de manière à varier la masse inertielle en fonction du degré d'enfoncement de l'amortisseur.

La figure 3 illustre une variante de l'amortisseur de la figure 1, où deux pistons annulaires 12.1 et 12.2 sont disposés dans la chambre 22, à distance axiale l'un de l'autre. Chacun comprend un passage 26.1 et 26.2 pour le fluide hydraulique, et aussi un clapet de fermeture 28.1 et 28.2 maintenu par des ressorts 30.1 et 30.2, respectivement. On peut observer que pour le premier piston 12.1, la course du clapet de fermeture 28.1 est inférieure à celle du clapet de fermeture 28.2 du deuxième piston 12.2. On peut également observer que le nombre de tours que fait la rainure 24 en vis-à-vis du premier piston 12.1 et différent, en l'occurrence inférieur, au nombre de tours que fait la rainure 24 en vis-à-vis du deuxième piston 12.2. Une telle configuration est intéressante en ce qu'elle permet d'utiliser deux masses d'inertie différentes avantageusement avec des seuils d'activation différents. Aussi des clapets de décharge de caractéristiques différentes peuvent être prévus sur ces pistons 12.1 et 12.2, ce qui permet d'obtenir des seuils de saturation différents.

L'amortisseur qui vient d'être décrit est particulièrement intéressant en ce qu'il combine un circuit hydraulique à amortissement classique et à un circuit hydraulique inertiel, et ce de manière compacte, économique et performante. Le circuit hydraulique inertiel permet en effet de participer à l'amortissement pour les plus grands débattements, ce qui permet de prévoir un niveau d'amortissement classique plus faible, procurant ainsi un plus grand confort sur route normale.

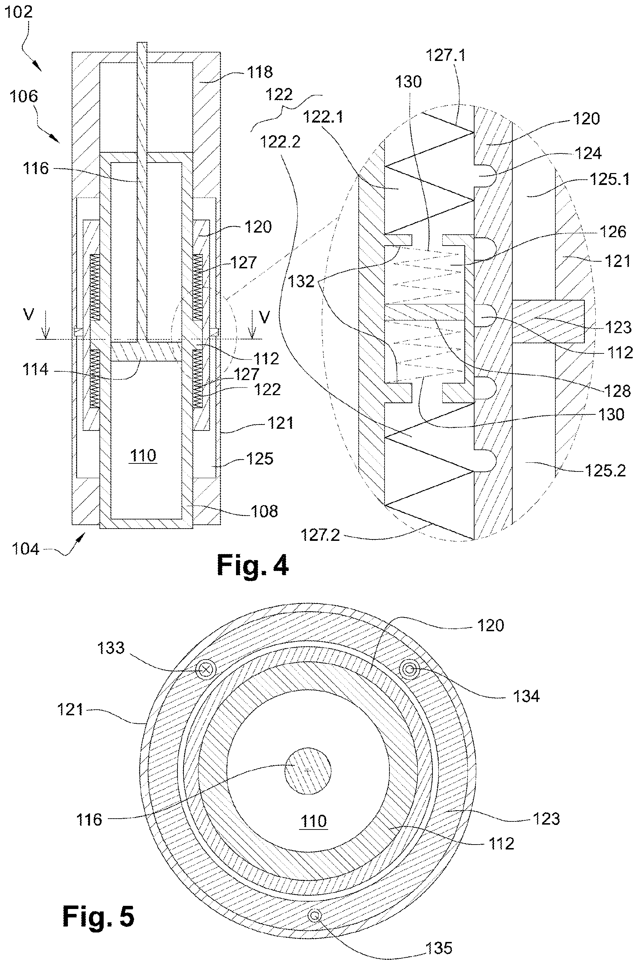

Les figures 4 et 5 sont des vues schématiques, en coupe longitudinale, d'un amortisseur 102 selon un second mode de réalisation de l'invention.

Comme pour le premier mode de réalisation, tout au long de la description est entendu par le terme de paroi axiale une paroi orientée selon un axe vertical de l'amortisseur 102 suivant l'orientation de la figure 4 et par le terme de paroi radiale une paroi orientée selon un axe horizontal de l'amortisseur 102 toujours suivant l'orientation de la figure 4.

La coupe longitudinale passe par l'axe de symétrie de l'amortisseur 102.

L'amortisseur 102 comporte un premier élément 104 et un deuxième élément 106, aptes à coulisser l'un par rapport à l'autre.

Chacun des premier et deuxième éléments 104 et 106 est destiné à être fixé, au choix, à une pièce mobile de la suspension d'un véhicule ou à une pièce fixe de la carrosserie dudit véhicule, respectivement.

Plus particulièrement, le premier élément 104 comprend un cylindre intérieur 108 délimitant une chambre intérieure 110 généralement cylindrique.

Le deuxième élément 106 comprend un piston intérieur 114 supporté par une tige 116 et monté coulissant dans la chambre intérieure 110.

A cet effet, le cylindre intérieur 108 est fermé à chacune de ses deux extrémités axiales, la fermeture supérieure étant traversée par la tige 116 (suivant l'orientation de la figure 4) et comporte des moyens d'étanchéité (non représentés) avec la tige 116, ces moyens d'étanchéité étant en soi bien connus de l'homme de métier.

La chambre intérieure 110 comprend un fluide hydraulique, avantageusement visqueux avec une viscosité supérieure ou égale à celle du liquide de suspension Citroën^{®} (LDS), à savoir supérieure ou égale à 18 mm²/s à 40°C et/ou 5.9 mm²/s à 100°C.

Le piston intérieur 114 comprend un ou plusieurs passages à restriction potentiellement variable en fonction de différence de pression (non représentés), reliant les deux portions de la chambre intérieure 110, de manière à ce qu'un coulissement relatif entre, d'une part, le piston intérieur 114 et la tige 116, et d'autre part le cylindre intérieur 108 provoque une circulation forcée du fluide hydraulique au travers du ou des passages à restriction sur le piston intérieur 114.

La résistance à l'écoulement au travers de ce ou ces passages génère au niveau de la tige 116 et au niveau du cylindre intérieur 108, des efforts qui sont essentiellement proportionnels à la vitesse d'écoulement du fluide et donc de la vitesse de coulissement relatif entre le piston intérieur 114 et le cylindre intérieur 108, ce principe d'amortissement étant bien connu en soi de l'homme de métier.

Le deuxième élément 106 de l'amortisseur 102 comprend, outre le piston intérieur 114 et la tige 116, un cylindre extérieur 118 entourant le cylindre intérieur 108 du premier élément 104, et, partant, la tige 116 et le piston intérieur 114.

Le cylindre extérieur 118 est rigidement lié à la tige 116. Plus spécifiquement, le cylindre extérieur 118 est monté coulissant sur la surface cylindrique extérieure du cylindre intérieur 108.

Le cylindre extérieur 118 comporte une cavité qui est formée le long de sa surface cylindrique intérieure.

Le cylindre extérieur 118 est positionné de manière coulissante et étanche, aux deux extrémités de ladite cavité, autour du cylindre intérieur 108.

Dans ladite cavité du cylindre extérieur 118 est positionné un élément intermédiaire 120 de forme cylindrique.

Entre la surface cylindrique intérieure de la cavité du cylindre extérieur 118 et la surface cylindrique extérieure de l'élément intermédiaire 120 et la surface cylindrique extérieure du cylindre intérieur 108, est délimitée une chambre extérieure 125.

L'élément intermédiaire 120 comporte une cavité qui est formée le long de sa surface cylindrique intérieure.

L'élément intermédiaire 120 est positionné de manière coulissante et étanche, à ces deux extrémités, autour du cylindre intérieur 108.

Entre la surface cylindrique intérieure de la cavité de l'élément intermédiaire 120 et la surface cylindrique extérieure du cylindre extérieur 118 est délimitée une chambre intermédiaire 122 dite chambre annulaire.

Le cylindre intérieur 108 comporte une collerette, en saillie de sa surface cylindrique extérieure, qui forme un piston intermédiaire 112, de forme annulaire, apte à coulisser le long de la chambre annulaire 122 en fonction du mouvement relatif entre le cylindre intérieur 108 et l'élément intermédiaire 120.

Le piston intermédiaire 112 sépare la chambre annulaire 122 en deux portions 122.1 et 122.2. Suivant l'orientation de l'amortisseur 102 tel que représenté à la figure 4, est formée une portion supérieure 122.1 de la chambre annulaire 122 et une portion inférieure 122.2 de chambre annulaire 122.

De part et d'autre du piston intermédiaire 112 est positionné un ressort 127 en appui entre chacun des deux bords axiaux de la chambre annulaire 122 et la face correspondante du piston annulaire 112, faisant que, toujours suivant l'orientation de l'amortisseur tel que représenté à la figure 104, un premier ressort haut 127.1 est positionné dans la portion supérieur 122.1 de la chambre annulaire 122 et un second ressort bas 127.2 est positionné dans la portion inférieure 122.2 de la chambre annulaire 122.

L'élément intermédiaire 120 présente le long de sa surface intérieure radiale une rainure 124 formée de manière hélicoïdale, notamment par usinage dans l'épaisseur de la paroi intermédiaire 120 depuis sa surface intérieure radiale.

Le piston annulaire 112 s'étend axialement sur au moins un tour de la rainure hélicoïdale 124, préférentiellement sur au moins deux tours de ladite rainure hélicoïdale 124, plus préférentiellement encore sur au moins trois tours ou plus.

Il est aussi à noter que le pas d'enroulement de la rainure hélicoïdale peut être variable le long de la surface intérieure radiale de l'élément intermédiaire 120, de manière à varier la masse inertielle en fonction du degré d'enfoncement de l'amortisseur 112.

Le piston intermédiaire 112 comprend au moins un passage axial de fuite 126 et au moins un clapet de fermeture 128 maintenu en position axialement neutre par des ressorts 130 positionnés de part et d'autre dudit clapet de fermeture 128.

Des butées 132 positionnées aux deux extrémités du passage axial de fuite 126, forment des surfaces d'appui pour les ressorts 130 du piston intermédiaire 112.

Dans la position neutre telle que représentée, le clapet de fermeture 128, bien qu'obturant au moins en majeure partie le passage 126, peut se déplacer axialement entre les butées 132.

La chambre annulaire 122 est remplie d'un fluide hydraulique, préférentiellement différent de celui de la chambre intérieure 110.

Ce fluide est avantageusement un fluide lourd de faible viscosité, en l'occurrence de viscosité inférieure ou égale à celle du glycol.

Une bague 123 délimite en deux portions 125.1 et 125.2 la chambre extérieure 125.

La chambre extérieure 125 est séparée de la chambre annulaire 122 et de la chambre intérieure 110, permettant d'y prévoir un fluide hydraulique potentiellement différent de celui notamment de la chambre annulaire 122.

Différents clapets sont prévus le long de la bague 123, notamment un premier clapet de décharge 133 qui permet un échange de fluide de la première portion 125.1 de la chambre extérieure 125 vers la seconde portion 125.2 de la chambre extérieure 125.

Un second clapet de décharge 134 qui permet un échange de fluide de la seconde portion 125.2 de la chambre extérieure 125 vers la première portion 125.1 de la chambre extérieure 125.

Un clapet de fuite 135 permettant une fuite permanente calibrée du fluide hydraulique entre les deux portions 125.1 et 125.2 de la chambre extérieure 125.

Lors d'un mouvement de coulissement relatif entre les premier et deuxième éléments 104 et 106 de l'amortisseur 102, outre les phénomènes de passage du fluide de la chambre intérieure 110 au travers du piston 114, mentionnés ci-avant, les volumes de portions 122.1 et 122.2 de la chambre 122 vont varier dans des sens opposés et, partant, provoquer un passage du fluide au travers et le long de la portion de la rainure 124 qui est située en vis-à-vis du piston annulaire 112.

Le volume de cette portion de la rainure 124 étant rempli du fluide hydraulique, la masse correspondante dudit fluide forme ainsi une masse qui est mise en mouvement par le coulissement relatif entre les premier et deuxième 104 et 106, générant ainsi une force d'amortissement qui est proportionnelle à l'accélération du mouvement de coulissement relatif entre les premier et deuxième éléments 104 et 106.

Plus spécifiquement, la paroi intermédiaire 120 est maintenue axialement en position centrale par les ressorts 127.

Le piston intermédiaire 112 avantageusement ne comporte pas de clapets de décharge, ceux-ci étant prévus sur la bague 123 qui délimite en deux portions 125.1 et 125.2 la chambre extérieure 125.

Le fonctionnement de l'amortisseur est donc le suivant.

En cas de sollicitations avec des faibles débattements, le clapet de fermeture 128 manque de buter sur les sièges 132, ce qui a pour effet que le circuit hydraulique inertiel ne génère pas de force significative et est par conséquent inactif.

En cas de débattements plus importants, en l'occurrence des débattements qui ont pour effet d'amener le clapet de fermeture 128 contre au moins une des butées 132, le fluide hydraulique de la chambre 122 est déplacé le long de la portion de rainure 124 en vis-à-vis du piston 112, générant ainsi un effort résistant du type inertiel.

Cet effort résistant qui a tendance à déplacer la paroi 120 est repris par une augmentation de pression dans la portion de la chambre extérieure 125 dont le volume tend à diminuer par le déplacement de la paroi 120. Cette pression est transmise au clapets de décharge 133 et 134 et au clapet de fuite 135 sur la bague 123.

Lorsque le débattement génère une pression supérieure ou égale à la pression limite d'ouverture du ou des clapets de décharge, celui-ci/ceux-ci s'ouvrent et autorisent un passage du fluide depuis la portion de la chambre extérieure 125 qui en pression vers l'autre portion de ladite chambre extérieure 125, ce qui a pour effet de limiter la force résistante générée par le circuit hydraulique inertiel.

Un autre fluide que le fluide inertiel peut être utilisé pour coopérer avec les clapets de décharge 133 et 134.

Cela procure davantage de finesse d'ajustement du comportement du circuit inertiel, en particulier au niveau de son seuil de désactivation.

Le circuit d'activation n'étant pas relié au circuit inertiel, les régimes de fonctionnement sont indépendants et mieux contrôlables.

Il est à noter qu'il est préférable que la désactivation du circuit inertiel puisse se faire dans les deux sens, c'est-à-dire lorsque l'amortisseur est en compression ou attaque, et lorsqu'il est en extension ou détente.

Alternativement, aux deux clapets de décharge, un seul clapet de décharge apte à travailler dans les deux sens peut être prévu.

Le clapet de fuite calibré n'intervient que faiblement lors du fonctionnement de l'amortisseur et lors du fonctionnement du circuit inertiel, mais permet à l'ensemble de se repositionner dans la position neutre après avoir été sollicité pour une prochaine utilisation sachant que les deux clapets de décharges sont alors en position fermée.

## Revendications

1. Amortisseur (2 ; 102) pour suspension de véhicule automobile, comprenant :
- un premier élément (4 ; 104) destiné à être fixé à l'une d'une partie mobile de la suspension et d'une partie fixe du véhicule ; et
- un deuxième élément (6 ; 106) positionné concentriquement autour du premier élément (4; 104), apte à coulisser axialement par rapport au premier élément (4 ; 104), et destiné à être fixé à l'autre de la partie mobile de la suspension et de la partie fixe du véhicule ;
les premier et deuxième éléments (4, 6 ; 104, 106) formant un circuit hydraulique amortisseur et un circuit hydraulique inertiel,
le premier élément (4 ; 104) étant un cylindre (8 ; 108) formant une chambre cylindrique (10 ; 110) et le deuxième élément (6 ; 106) comprenant un piston intérieur (14 ; 114) monté coulissant dans la chambre cylindrique (10 ; 110) et une tige (16 ; 116) liée audit piston intérieur (14, 114), ladite chambre cylindrique (10, 110) et ledit piston intérieur (14, 114) correspondant à un des circuits hydrauliques amortisseur (10, 14 ; 110, 114) et inertiel (12, 22 ; 112, 122, 125), et un cylindre extérieur (18 ; 118) lié à la tige (16 ; 116) et entourant concentriquement le premier élément (4 ; 104) de manière à coulisser le long de la paroi extérieure dudit premier élément (4 ; 104) et à former avec le premier élément (4 ; 104) une chambre extérieure (22 ; 125), et où
le premier élément (4; 104) comprend une portion annulaire extérieure formant au moins un piston annulaire (12 ; 112), l'amortisseur comprenant une paroi cylindrique (20; 120) entourant concentriquement une partie du premier élément (4 ; 104) pour former une chambre annulaire (22 ; 122), le au moins un piston annulaire (12 ; 112) coulissant le long de ladite paroi cylindrique (20 ; 120) dans la chambre annulaire (22 ; 122), **caractérisé en ce que** la paroi cylindrique (20 ; 120) comprend une rainure hélicoïdale (24 ; 124) formant, en vis-à-vis du au moins un piston annulaire (12 ; 122), au moins un passage pour le fluide hydraulique lors d'un coulissement du au moins un piston annulaire (12 ; 112) le long de la paroi cylindrique (20 ; 120).

2. Amortisseur (2 ; 102) selon la revendication 1, **caractérisé en ce que** la rainure hélicoïdale (24 ; 124) présente un pas variable de manière à faire varier la longueur du ou des passages pour le fluide hydraulique en fonction de la position de coulissement du au moins un piston annulaire (12 ; 112) par rapport à la paroi (20 ; 120).

3. Amortisseur (2 ; 102) selon la revendication 1 ou la revendication 2, **caractérisé en ce que** l'au moins un piston annulaire (12 ; 112) s'étend axialement sur au moins deux tours de la rainure hélicoïdale (24 ; 124).

4. Amortisseur (2 ; 102) selon l'une des revendications 1 à 3, **caractérisé en ce que** l'au moins un piston annulaire (12 ; 112) comprend au moins un passage axial de fuite (26 ; 126) pour le fluide hydraulique et au moins un clapet de fermeture (28 ; 128) configuré pour fermer ledit passage lorsque la course de coulissement dudit au moins un piston par rapport à la paroi (20 ; 120) est supérieur à une valeur prédéterminée.

5. Amortisseur (2) selon la revendication 4, **caractérisé en ce que** la chambre extérieure (22) forme aussi ladite chambre annulaire dans laquelle est apte à coulisser le au moins un piston annulaire (12).

6. Amortisseur (2) selon la revendication 5, **caractérisé en ce que** l'au moins un piston (12) comprend au moins deux pistons (12.1, 12.2), les clapets de fermeture (28.1, 28.2) desdits pistons présentant des courses de fermeture différentes.

7. Amortisseur (2) selon la revendication 6, **caractérisé en ce que** le au moins un piston annulaire (12) comprend au moins un clapet de décharge (34) apte à ouvrir un passage axial de décharge pour le fluide hydraulique en cas de surpression dudit fluide.

8. Amortisseur (102) selon l'une quelconque des revendications 1 à 4, **caractérisé en ce que**, entre le premier élément (104) et le deuxième élément (106), est positionnée une paroi intermédiaire (120) cylindrique apte à coulisser le long la paroi extérieure du premier élément (104), ladite paroi intermédiaire (120) délimitant la chambre annulaire (122) qui est délimitée d'un côté par ladite paroi cylindrique et de l'autre côté par la paroi extérieure du premier élément (104), comportant un fluide hydraulique, le piston annulaire (112) est apte à coulisser le long de ladite chambre annulaire (122), ladite chambre annulaire (122) comportant des moyens de rappel (127) positionnés entre le piston annulaire (112) et la paroi intermédiaire (120).

9. Amortisseur (102) selon la revendication 8, **caractérisé en ce que** les moyens de rappel (127) comportent au moins deux ressort (127.1, 127.2), un premier ressort (27.1) étant positionné en appui entre une première face axiale du piston (112) et un premier bord en regard de la chambre annulaire (122) et un second ressort (127.1) étant positionné en appui entre une seconde face axiale du piston annuaire (112) et un second bord en regard de la chambre annulaire (122).

10. Amortisseur (102) selon la revendication 8 ou 9, **caractérisé en ce que** la chambre extérieure (125) comporte un fluide hydraulique et une bague (123) qui délimite en deux portions (125.1, 125.2) ladite chambre extérieure (125), ladite bague (123) étant adaptée pour contrôler le transfert de fluide hydraulique entre les deux portions (125.1, 125.2).

11. Amortisseur (102) selon la revendication 10, **caractérisé en ce que** la bague (123) comporte au moins un clapet de décharge (133, 134) permettant un échange du fluide hydraulique entre les deux portions (125.1, 125.2) de la chambre extérieure (125) au-delà d'une certaine pression de fluide dans une desdites deux portions (125.1, 125.2) et un clapet de fuite (135) permettant une fuite permanente calibrée du fluide hydraulique entre les deux portions (125.1, 125.2) de la chambre extérieure (125).

12. Véhicule comportant une suspension équipée d'un amortisseur (2 ; 102) selon l'une quelconque des revendications précédentes.

## Patentansprüche

1. Stoßdämpfer (2; 102) für die Federung eines Kraftfahrzeugs, umfassend:
- ein erstes Element (4; 104), das dazu bestimmt ist, an einem beweglichen Teil der Aufhängung oder einem festen Teil des Fahrzeugs befestigt zu werden; Und
- ein zweites Element (6; 106), das konzentrisch um das erste Element (4; 104) positioniert ist, axial relativ zum ersten Element (4; 104) gleiten kann und dazu bestimmt ist, am anderen beweglichen Teil des Elements befestigt zu werden Federung und fester Teil des Fahrzeugs;
wobei die ersten und zweiten Elemente (4, 6; 104, 106) einen Dämpfungshydraulikkreis und einen Trägheitshydraulikkreis bilden,
**dadurch gekennzeichnet, dass** das erste Element (4; 104) ein Zylinder (8; 108) ist, der eine zylindrische Kammer (10; 110) bildet, und das zweite Element (6; 106) einen inneren Kolben (14; 114) umfasst, der verschiebbar darin montiert ist zylindrische Kammer (10; 110) und eine Stange (16; 116), die mit dem inneren Kolben (14, 114) verbunden ist, wobei die zylindrische Kammer (10, 110) und der innere Kolben (14, 114) einer der Dämpferhydraulik entsprechen Kreisläufe (10, 14; 110, 114) und Trägheitskreise (12, 22; 112, 122, 125) und einen externen Zylinder (18; 118), der mit der Stange (16; 116) verbunden ist und das erste Element (4) konzentrisch umgibt; 104), um entlang der Außenwand des ersten Elements (4; 104) zu gleiten und mit dem ersten Element (4; 104) eine äußere Kammer (22; 125) zu bilden, und wobei das erste Element (4 ; 104) ) umfasst einen äußeren ringförmigen Abschnitt, der mindestens einen ringförmigen Kolben (12; 112) bildet, wobei der Stoßdämpfer eine zylindrische Wand (20; 120) umfasst, die einen Teil des ersten Elements (4; 104) konzentrisch umgibt. 104), um eine Ringkammer (22; 122) zu bilden, wobei der mindestens eine Kolben (12; 112) entlang der zylindrischen Wand (20; 120) in der Ringkammer (22; 122) gleitet, **dadurch gekennzeichnet, dass** die zylindrische Wand ( 20; 120) umfasst eine spiralförmige Nut (24; 124), die gegenüber dem mindestens einen Kolben (12; 122) mindestens einen Durchgang für die Hydraulikflüssigkeit bildet, während der minus eine Kolben (12; 112) entlang des Zylinders gleitet Wand (20; 120).

2. Stoßdämpfer (2; 102) nach Anspruch 3, **dadurch gekennzeichnet, dass** die spiralförmige Nut (24; 124) eine variable Steigung aufweist, um die Länge des Durchgangs bzw. der Durchgänge für die Hydraulikflüssigkeit in Abhängigkeit von der Gleitposition zu variieren des mindestens einen Kolbens (12; 112) relativ zur Wand (20; 120).

3. Stoßdämpfer (2; 102) nach einem der Ansprüche 2 und 3, **dadurch gekennzeichnet, dass** sich der mindestens eine Kolben (12; 112) axial über mindestens zwei Windungen der Wendelnut (24; 124) erstreckt.

4. Stoßdämpfer (2; 102) nach einem der Ansprüche 2 bis 5, **dadurch gekennzeichnet, dass** der mindestens eine Kolben (12; 112) mindestens einen axialen Leckagekanal (26; 126) für die Hydraulikflüssigkeit und mindestens einen at umfasst mindestens ein Schließventil (28; 128), das so konfiguriert ist, dass es den Durchgang schließt, wenn der Gleithub des mindestens einen Kolbens relativ zur Wand (20; 120) größer als ein vorgegebener Wert ist.

5. Stoßdämpfer (2) nach Anspruch 6, **dadurch gekennzeichnet, dass** die Außenkammer (22) auch die Ringkammer bildet, in der der mindestens eine Kolben (12) gleiten kann.

6. Stoßdämpfer (2) nach Anspruch 7, **dadurch gekennzeichnet, dass** der mindestens eine Kolben (12) mindestens zwei Kolben (12.1, 12.2) umfasst, wobei die Schließventile (28.1, 28.2) dieser Kolben unterschiedliche Schließhübe aufweisen.

7. Stoßdämpfer (2) nach Anspruch 8, **dadurch gekennzeichnet, dass** der mindestens eine Kolben (12) mindestens ein Überdruckventil (34) umfasst, das im Falle eines Überdrucks des Fluids einen axialen Auslasskanal für das Hydraulikfluid öffnen kann.

8. Stoßdämpfer (102) nach einem der Ansprüche 1 bis 6, **dadurch gekennzeichnet, dass** zwischen dem ersten Element (104) und dem zweiten Element (106) eine zylindrische Zwischenwand (120) angeordnet ist, die entlang der Außenwand gleiten kann des ersten Elements (104), wobei die Zwischenwand (120) die ringförmige Kammer (122) begrenzt, die auf einer Seite durch die zylindrische Wand und auf der anderen Seite durch die Außenwand des ersten Elements (104) begrenzt wird, umfassend a Hydraulikflüssigkeit kann der Kolben (112) entlang der Ringkammer (122) gleiten, wobei die Ringkammer (122) Rückführmittel (127) aufweist, die zwischen dem Kolben (112) und der Zwischenwand (120) positioniert sind.

9. Stoßdämpfer (102) nach Anspruch 10, **dadurch gekennzeichnet, dass** die Rückstellmittel (127) mindestens zwei Federn (127.1, 127.2) umfassen, wobei eine erste Feder (27.1) zur Unterstützung zwischen einer ersten axialen Fläche des Kolbens (112) positioniert ist ). ) und eine erste Kante, die der Ringkammer (122) zugewandt ist, und eine zweite Feder (127.1), die zur Unterstützung zwischen einer zweiten axialen Fläche des Ringkolbens (112) und einer zweiten Kante, die der Ringkammer (122) zugewandt ist, positioniert ist.

10. Stoßdämpfer (102) nach Anspruch 10 oder 11, **dadurch gekennzeichnet, dass** die äußere Kammer (125) eine Hydraulikflüssigkeit und einen Ring (123) umfasst, der die äußere Kammer (125) in zwei Abschnitte (125.1, 125.2) begrenzt, wobei der Ring genannt wird (123), das so ausgelegt ist, dass es die Übertragung von Hydraulikflüssigkeit zwischen den beiden Abschnitten (125.1, 125.2) steuert.

11. Stoßdämpfer (102) nach Anspruch 12, **dadurch gekennzeichnet, dass** der Ring (123) mindestens ein Entlastungsventil (133, 134) aufweist, das einen Austausch von Hydraulikflüssigkeit zwischen den beiden Abschnitten (125.1, 125.2) der Außenkammer (125) ermöglicht) über einen bestimmten Flüssigkeitsdruck in einem der beiden Abschnitte (125.1, 125.2) hinaus und ein Leckventil (135), das eine kalibrierte permanente Leckage der Hydraulikflüssigkeit zwischen den beiden Abschnitten (125.1, 125.2) des Kammeräußeren (125) ermöglicht.

12. Fahrzeug mit einer Aufhängung, die mit einem Stoßdämpfer (2; 102) nach einem der vorhergehenden Ansprüche ausgestattet ist.

## Claims

1. Shock absorber (2; 102) for motor vehicle suspension, comprising:
- a first element (4; 104) intended to be fixed to one of a movable part of the suspension and a fixed part of the vehicle; And
- a second element (6; 106) positioned concentrically around the first element (4; 104), capable of sliding axially relative to the first element (4; 104), and intended to be fixed to the other of the movable part of the suspension and the fixed part of the vehicle;
the first and second elements (4, 6; 104, 106) forming a damping hydraulic circuit and an inertial hydraulic circuit,
**characterized in that** the first element (4; 104) is a cylinder (8; 108) forming a cylindrical chamber (10; 110) and the second element (6; 106) comprises an internal piston (14; 114) slidably mounted in the cylindrical chamber (10; 110) and a rod (16; 116) linked to said inner piston (14, 114), said cylindrical chamber (10, 110) and said inner piston (14, 114) corresponding to one of the damper hydraulic circuits (10, 14; 110, 114) and inertial (12, 22; 112, 122, 125), and an external cylinder (18; 118) linked to the rod (16; 116) and concentrically surrounding the first element (4; 104) so as to slide along the outer wall of said first element (4; 104) and to form with the first element (4; 104) an outer chamber (22; 125), and where the first element (4; 104) ) comprises an outer annular portion forming at least one annular piston (12; 112), the shock absorber comprising a cylindrical wall (20; 120) concentrically surrounding a part of the first element (4; 104) to form an annular chamber (22; 122), the at least one piston (12; 112) sliding along said cylindrical wall (20; 120) in the annular chamber (22; 122), **characterized in that** the cylindrical wall (20; 120) comprises a helical groove (24; 124) forming, opposite the at least one piston (12; 122), at least one passage for the hydraulic fluid during sliding of the minus one piston (12; 112) along the cylindrical wall (20; 120).

2. Shock absorber (2; 102) according to claim 3, **characterized in that** the helical groove (24; 124) has a variable pitch so as to vary the length of the passage(s) for the hydraulic fluid as a function of the sliding position of the at least one piston (12; 112) relative to the wall (20; 120).

3. Shock absorber (2; 102) according to one of claims 2 and 3, **characterized in that** the at least one piston (12; 112) extends axially over at least two turns of the helical groove (24; 124).

4. Shock absorber (2; 102) according to one of claims 2 to 5, **characterized in that** the at least one piston (12; 112) comprises at least one axial leakage passage (26; 126) for the hydraulic fluid and at least one at least one closing valve (28; 128) configured to close said passage when the sliding stroke of said at least one piston relative to the wall (20; 120) is greater than a predetermined value.

5. Shock absorber (2) according to claim 6, **characterized in that** the outer chamber (22) also forms said annular chamber in which the at least one piston (12) is able to slide.

6. Shock absorber (2) according to claim 7, **characterized in that** the at least one piston (12) comprises at least two pistons (12.1, 12.2), the closing valves (28.1, 28.2) of said pistons having different closing strokes .

7. Shock absorber (2) according to claim 8, **characterized in that** the at least one piston (12) comprises at least one relief valve (34) capable of opening an axial discharge passage for the hydraulic fluid in the event of overpressure of said fluid.

8. Shock absorber (102) according to any one of claims 1 to 6, **characterized in that**, between the first element (104) and the second element (106), is positioned a cylindrical intermediate wall (120) capable of sliding along the outer wall of the first element (104), said intermediate wall (120) delimiting the annular chamber (122) which is delimited on one side by said cylindrical wall and on the other side by the outer wall of the first element (104), comprising a hydraulic fluid, the piston (112) is able to slide along said annular chamber (122), said annular chamber (122) comprising return means (127) positioned between the piston (112) and the intermediate wall ( 120).

9. Shock absorber (102) according to claim 10, **characterized in that** the return means (127) comprise at least two springs (127.1, 127.2), a first spring (27.1) being positioned in support between a first axial face of the piston (112). ) and a first edge facing the annular chamber (122) and a second spring (127.1) being positioned in support between a second axial face of the annular piston (112) and a second edge facing the annular chamber (122).

10. Shock absorber (102) according to claim 10 or 11, **characterized in that** the outer chamber (125) comprises a hydraulic fluid and a ring (123) which delimits said outer chamber (125) into two portions (125.1, 125.2), said ring (123) being adapted to control the transfer of hydraulic fluid between the two portions (125.1, 125.2).

11. Shock absorber (102) according to claim 12, **characterized in that** the ring (123) comprises at least one relief valve (133, 134) allowing an exchange of hydraulic fluid between the two portions (125.1, 125.2) of the outer chamber ( 125) beyond a certain fluid pressure in one of said two portions (125.1, 125.2) and a leak valve (135) allowing a calibrated permanent leak of the hydraulic fluid between the two portions (125.1, 125.2) of the chamber exterior (125).

12. Vehicle comprising a suspension equipped with a shock absorber (2; 102) according to any one of the preceding claims.
